Europäisches Patentamt

European Patent Office

Office européen des brevets

(11) Veröffentlichungsnummer: **0 306 667 B1**

(12) **EUROPÄISCHE PATENTSCHRIFT**

(45) Veröffentlichungstag der Patentschrift: **23.10.91**

(21) Anmeldenummer: **88111468.0**

(22) Anmeldetag: **16.07.88**

(51) Int. Cl.⁵: **G11B 17/22**, G11B 17/30, G11B 33/04, G11B 23/03

(54) **Magazin und Schublade zur Aufnahme plattenförmiger Aufzeichnungsträger.**

(30) Priorität: **27.08.87 DE 3728588**

(43) Veröffentlichungstag der Anmeldung:
**15.03.89 Patentblatt 89/11**

(45) Bekanntmachung des Hinweises auf die
Patenterteilung:
**23.10.91 Patentblatt 91/43**

(84) Benannte Vertragsstaaten:
**AT BE CH DE ES FR GB GR IT LI LU NL SE**

(56) Entgegenhaltungen:
**EP-A- 0 198 434**
**EP-A- 0 212 244**
**EP-A- 0 225 766**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Caspers, Johannes**
**An der Kapelle 1**
**W-7730 Villingen-Schwenningen(DE)**
Erfinder: **Geiger, Erich**
**Panoramaweg 13**
**W-7731 Unterkirnach(DE)**

## Beschreibung

Die Erfindung betrifft ein Magazin und eine Schublade zur Aufnahme plattenförmiger Aufzeichnungsträger für ein Aufzeichnungs- und/oder Wiedergabegerät.

Einfache CD-Spieler sind nicht mit einem Magazin zur Aufnahme mehrerer CD-Platten ausgestattet. Sie sind lediglich mit einer Schublade zur Aufnahme einer CD-Platte ausgerüstet, die ein- und ausfahrbar ist, um die CD-Platte in die Schublade einlegen und aus ihr herausnehmen zu können. Reine Wechselspieler mit einem Magazin zum Beispiel in EP-A-212 244, jedoch ohne Schublade, sind ebenfalls bekannt, haben aber den Nachteil, daß sie nur als Wechselspieler betrieben werden können. Es gibt jedoch auch CD-Spieler, bei denen anstelle der Schublade ein Magazin einsetzbar ist zum Beispiel in EP-A-225 766. Diese Geräte haben nun den Nachteil, daß sie entweder nur als Einzelspieler oder nur als Wechselspieler betrieben werden können. Um diese Nachteile zu vermeiden sind die teureren CD-Spieler sowohl mit einer Schublade als auch mit einem Magazin ausgestattet. Der Nachteil dieser Geräte liegt in dem großen Platzbedarf für das Magazin und für die Schublade.

Es ist daher Aufgabe der Erfindung, bei einem CD-Spieler, der sowohl als Einzel- als auch als Wechselspieler betrieben werden kann, Magazin und Schublade platzsparend zu gestalten.

Die Erfindung löst diese Aufgabe dadurch, daß das Magazin mit einer Schublade zu einem Teil kombiniert ist, zur Aufnahme eines zusätzlichen Informationsträgers, wenn das Magazin mit dem Aufzeichnungs-und/oder Wiedergabegerät zusammenwirkt.

Es zeigen

Figur 1        die Frontseite der Kombination aus Magazin und Schublade

Figur 2 und 3        einen Längsschnitt der Kombination aus Magazin und Schublade.

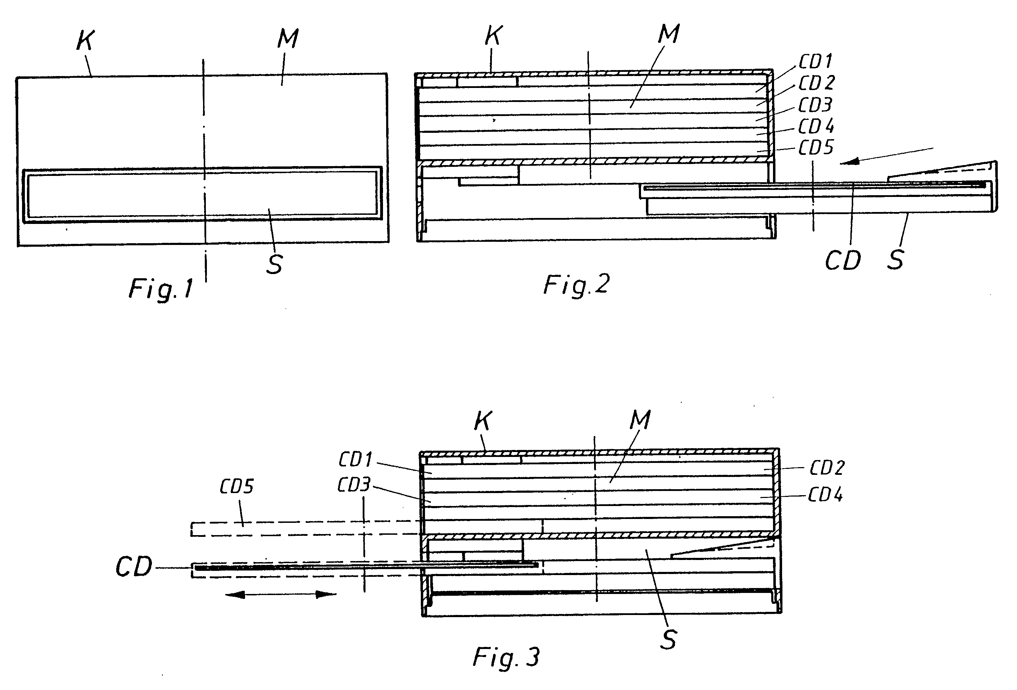

In Figur 1 ist die Frontseite F der Kombination K aus dem Magazin M und der Schublade S abgebildet. Das Magazin M liegt über der Schublade S. Es kann aber auch unter der Schublade S liegen, wie in Anspruch 3 angegeben ist. Bei der in Anspruch 4 beschriebenen Lösung besteht das Magazin aus zwei Teilen, zwischen denen die Schublade liegt.

Der Längsschnitt in Figur 2 zeigt das über der Schublade S angeordnete Magazin M für fünf CD-Platten CD1 bis CD5. Die Schublade S, in der eine CD-Platte CD liegt, ist ausgefahren.

Bei dem in Figur 3 dargestellten Längsschnitt der Kombination aus Magazin M und Schublade S ist die Schublade eingefahren, und die CD-Platte CD befindet sich in der Abspielposition. Über der CD-Platte CD ist die Abspielposition für die unterste CD-Platte CD5 des Magazins M gestrichelt eingezeichnet.

Dadurch, daß Magazin und Schublade derart miteinander kombiniert sind, daß sie ein Teil bilden, wird wesentlich weniger Platz benötigt, als wenn es zwei getrennte Teile wären. Weil das Magazin und die Schublade ein Teil bilden, vereinfacht sich dessen Herstellung, denn es werden weniger Werkzeuge und weniger Material benötigt. Ausserdem lassen sich aus einem Stück gefertigte Teile billiger produzieren, weil zusätzliche Montagearbeiten, wie sie bei zwei Teilen stets nötig sind, entfallen.

Die Erfindung ist für CD-Spieler, Videoplattenspieler, Draw-Disc-Spieler oder magneto-optische Geräte geeignet.

## Patentansprüche

1. Magazin (M) zur Aufnahme von plattenförmigen Informationsträgern (CD, CD1-CD5) für ein Aufzeichnungs- und/oder Wiedergabegerät, **dadurch gekennzeichnet,** daß das Magazin (M) mit einer Schublade (S) zu einem Teil (K) kombiniert ist, zur Aufnahme eines zusätzlichen Informationsträgers, wenn das Magazin (M) mit dem Aufzeichnungs-und/oder Wiedergabegerät zusammenwirkt.

2. Magazin nach Anspruch 1, **dadurch gekennzeichnet,** daß das Magazin (M) über der Schublade (S) liegt.

3. Magazin nach Anspruch 1, **dadurch gekennzeichnet,** daß das Magazin (M) unter der Schublade (S) liegt.

4. Magazin nach Anspruch 1, **dadurch gekennzeichnet,** daß das Magazin (M) in zwei Teile geteilt ist, zwischen denen die Schublade (S) liegt.

5. Magazin nach einem der vorangehenden Ansprüche, **dadurch gekennzeichnet,** daß das Magazin (M) und die Schublade (S) zur Aufnahme von CD-Platten (CD, CD1, ... , CD5) für einen CD-Spieler vorgesehen sind.

## Claims

1. A magazine (M) for accommodating disc-shaped information carriers (CD, CD1 - CD5) for a recording and/or reproducing machine, characterised in that the magazine (M) is combined with a drawer (S) to form one part (K) for accommodating an additional information carrier, when the magazine (M) co-operates with the recording and/or reproducing machine.

2. A magazine according to Claim 1, characterised in that the magazine (M) is located above the drawer (S).

3. A magazine according to Claim 1, characterised in that the magazine (M) is located below the drawer (S).

4. A magazine according to Claim 1, characterised in that the magazine (M) is divided into two parts, between which the drawer (S) is located.

5. A magazine according to any of the preceding claims, characterised in that the magazine (M) and the drawer (SD) are provided for accommodating CD discs (CD, CD1 ... CD5) for a CD player.

**Revendications**

1. Magasin (M) pour loger des supports d'enregistrement en forme de disque (CD, CD1-CD5) pour un appareil d'enregistrement et/ou de lecture, **caractérisé en ce** que le magasin (M) est combiné à un tiroir (S) en une pièce (K) pour le logement d'un support d'enregistrement supplémentaire lorsque le magasin (M) coopère avec l'appareil d'enregistrement et/ou de lecture.

2. Magasin selon la revendication 1, **caractérisé en ce** que le magasin (M) se situe au-dessus du tiroir (S).

3. Magasin selon la revendication 1, **caractérisé en ce** que le magasin (M) se situe au-dessous du tiroir (S).

4. Magasin selon la revendication 1, **caractérisé en ce** que le magasin (M) est séparé en deux parties entre lesquelles se trouve le tiroir (S).

5. Magasin selon l'une des revendications précédentes **caractérisé en ce** que le magasin (M) et le tiroir (S) sont prévus pour le logement de disques compacts (CD, CD1, ... , CD5) pour un lecteur de disques compacts.

Fig.1

Fig.2

Fig.3

EP 0 306 667 B1